Europäisches Patentamt

European Patent Office

Office européen des brevets

(11) Veröffentlichungsnummer: **0 143 355**
A2

(12) # EUROPÄISCHE PATENTANMELDUNG

(21) Anmeldenummer: **84113072.7**

(22) Anmeldetag: **30.10.84**

(51) Int. Cl.⁴: **G 02 B 27/02**

(30) Priorität: **03.11.83 DE 8331483 U**

(43) Veröffentlichungstag der Anmeldung: **05.06.85**
Patentblatt 85/23

(84) Benannte Vertragsstaaten: **DE FR GB IT SE**

(71) Anmelder: **Freundt, Klaus, Amselweg 15, D-6472 Altenstadt (DE)**

(72) Erfinder: **Freundt, Klaus, Amselweg 15, D-6472 Altenstadt (DE)**

(74) Vertreter: **Jochem, Bernd, Dipl.-Wirtsch.-Ing., Patentanwälte Beyer & Jochem Postfach 17 01 45, D-6000 Frankfurt/Main (DE)**

(54) **Handlesegerät mit Lupe für Planfilme.**

(57) Das Handlesegerät mit Lupe ist für Planfilme, z.B. Mikrofiche bestimmt. Es besteht aus einem Gehäuse, welches ein längliches Fenster (16) bildet. Der Planfilm (38) ist durch beiderseits des Fensters angeordnete Förderorgane, z.B. von Hand antreibbare Transportwalzen, quer zu dem Fenster transportierbar. In Längsrichtung des Fensters ist eine Lupe (24) verschieblich geführt. Bei Gebrauch liegt der Planfilm an einer lichtdurchlässigen Scheibe (34) an und wird durch einen mit der Lupe verbundenen Glättrahmen federnd gegen die Scheibe angedrückt. Die Lupe ist für unterschiedliche Vergrößerungen auswechselbar.

## Handlesegerät mit Lupe für Planfilme

Die Erfindung betrifft ein Handlesegerät mit Lupe für Planfilme, z.B. Mikrofiche, bestehend aus einem Gehäuse mit einer
am Planfilm angreifenden Transporteinrichtung zu dessen geradliniger Bewegung relativ zur Lupe.

Einfache Handlesegeräte haben ein gabelförmiges Gehäuse mit
einem Gelenk im Scheitel, so daß ein Planfilm zwischen den beiden Schenkeln, von denen einer nahe seinem freien Ende eine
Lupe trägt, eingeklemmt und während des Lesens gehalten werden
kann. Die wesentlichen Nachteile dieser einfachen Geräte bestehen darin, daß der Planfilm beim Verschieben von einer Lesestelle zu einer anderen keinerlei Führung hat, beim Festklemmen
zum Lesen einer Abbildung nahe dem unteren Rand mit seinem
größten Teil nicht mehr gehalten wird und daher umknickt, so
wie vor allem, daß man diese Geräte mit eingelegtem Planfilm
nicht vorübergehend ablegen und wieder aufnehmen kann, ohne daß
der Planfilm relativ zur Lupe verrutscht.

Es ist weiterhin ein verhältnismäßig kompliziertes Handlesegerät bekannt, bei welchem die Lupe fest am Gehäuse montiert ist
und der Planfilm in einen in das Gehäuse einschiebbaren Rahmen
mit einem länglichen Fenster eingesetzt wird. Um verschiedene
Abbildungen auf dem Planfilm in den Strahlengang der Lupe zu
bringen, kann einerseits der Rahmen in Längsrichtung seines
Fensters schrittweise verschoben werden, andererseits der Planfilm in Querrichtung von Hand durch den Führungsschlitz im Rahmen gezogen bzw. geschoben werden. In diesem Fall wird zwar beim
vorübergehenden Absetzen des Geräts ein gerade betrachteter Planfilm in seiner gerade eingenommenen Stellung relativ zur Lupe
gehalten, nachteilig ist jedoch, daß trotz der aufwendigen Konstruktion immer noch keine feinfühlige Einstellung des gesuchten und zu betrachtenden Bildes in beiden Koordinatenrichtungen möglich ist, weil sowohl das schrittweise Weiterschalten
des Rahmens als auch das Ziehen bzw. Verschieben des Planfilms
von Hand quer zur Längsrichtung des Fensters verhältnismäßig grobe Einstellvorgänge sind.

Der Erfindung liegt deshalb die Aufgabe zugrunde, ein Handlesegerät der eingangs genannten Art zu schaffen, welches
zwar sehr einfach aufgebaut und kostengünstig herzustellen ist,
jedoch eine sehr feinfühlige Einstellung des zu betrachtenden
Bildausschnitts und dessen zuverlässiges Festhalten unter der
Linse bei vorübergehendem Absetzen des Geräts gewährleistet.

Vorstehende Aufgabe wird erfindungsgemäß dadurch gelöst, daß
das Gehäuse ein längliches Fenster bildet, längs dessen die
Lupe verschieblich geführt ist und quer zu dem der Planfilm
durch beiderseits des Fensters angeordnete Förderorgane transportierbar ist.

Die Erfindung wird nachstehend anhand von in der Zeichnung dargestellten Ausführungsbeispielen näher erläutert. Es zeigen:

Fig. 1    eine Seitenansicht eines Handlesegeräts gemäß der
          Erfindung;

Fig. 2    eine Draufsicht des Geräts nach Fig. 1 bei eingelegtem Planfilm;

Fig. 3    eine Modifikation des in der Ansicht nach Fig. 1
          und 2 am rechten Ende des Geräts angebrachten
          Handrads zur Verschiebung des Planfilms;

Fig. 4    einen Querschnitt durch das Gerät nach Fig. 1 und
          2 im Bereich der Lupe;

Fig. 5    ein Detail aus Fig. 4 in größerem Maßstab;

Fig. 6    einen Querschnitt durch das Gerät nach Fig. 1 und
          2 nahe seinem rechten Ende mit Blick auf das Antriebsgetriebe;

Fig. 7    einen Teilquerschnitt durch das Gehäuse im Bereich einer Lagerung eines Transportwalzenpaars für den Filmtransport.

Das mit 1o bezeichnete Gehäuse besteht aus einem Oberteil 12 und einem mit diesem identisch geformten Unterteil 14. Die beiden Gehäuseteile bleiben während des Gebrauchs normalerweise fest miteinander verbunden, z.B. durch elastischen Schnappeingriff, können aber zu Reparaturzwecken voneinander getrennt werden. Statt angeformter, elastisch einrastender Verbindungsglieder können selbstverständlich auch Schrauben und andere lösbare Befestigungsglieder zur Verbindung der beiden Gehäuseteile 12 und 14 verwendet werden.

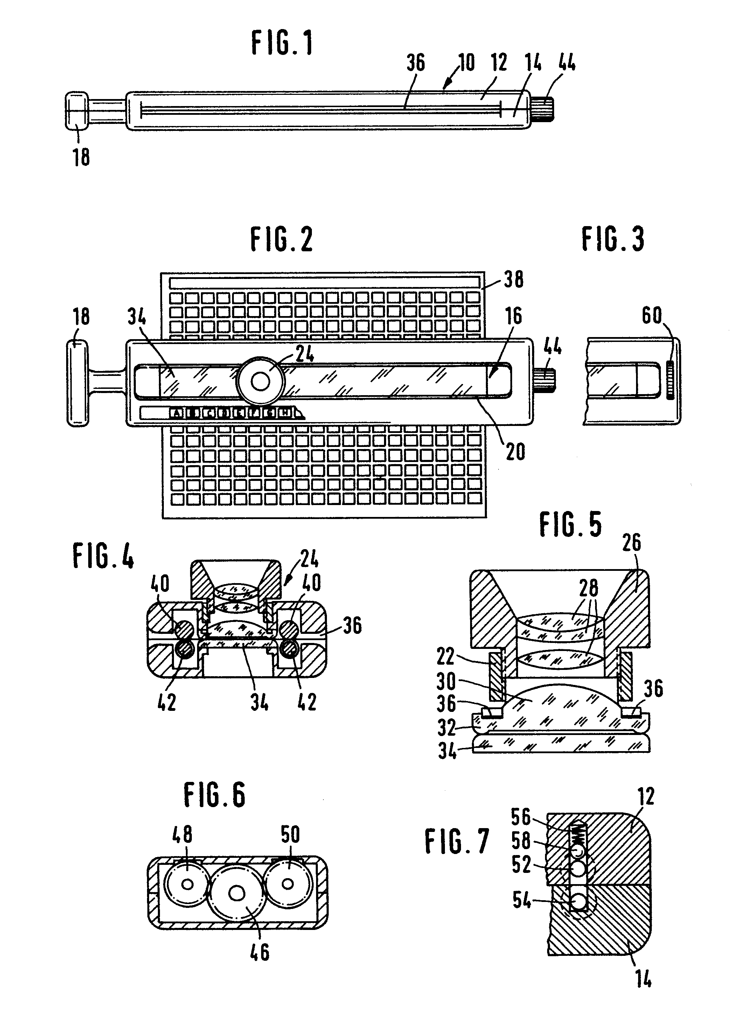

Im montierten Zustand hat das Gehäuse 1o die aus Fig. 1 und 2 ersichtliche längliche flache Form ähnlich einem verhältnismäßig dicken Lineal mit einer mittleren, sich fast über die gesamte Länge erstreckenden Durchbrechung, welche ein Fenster 16 bildet. Wahlweise kann wenigstens an einem Ende ein hammerartiger Handgriff 18 am Gehäuse 1o angeformt sein.

Die Längskanten des Fensters 16 bilden Längsführungen 2o für einen kleinen Schlitten 22, der eine insgesamt mit 24 bezeichnete Lupe trägt und längs des Fensters 16 verschieblich ist. Die Lupe selbst ist vorzugsweise zweiteilig ausgebildet. Das mit 26 bezeichnete Oberteil trägt mehrere Linsen 28, vorzugsweise aus hochwertigem optischen Material und lässt sich leicht aus dem Schlitten 22 herausschrauben, um bei einem anderen Vergrößerungsmaßstab leicht ausgewechselt werden zu können. Außerdem kann das hochwertige Lupenoberteil 26 auch noch für andere Zwecke als nur das beschriebene Handlesegerät verwendet werden.

Zum normalerweise mehrlinsigen optischen System der Lupe, wie es z.B. für Vergrößerungen in den üblichen Verhältnissen von etwa 15:1 bis etwa 25:1 erforderlich ist, gehört außerdem ein vorzugsweise vom Oberteil 26 getrennter Lupensockel 3o, der
z.B. ebenfalls aus optischem Glas, aber auch z.B. aus Acrylglas bestehen kann und die unterste Linse des Linsensystems
bildet. Wie am besten aus Fig. 5 ersichtlich, ist der Lupensockel 3o auf der Unterseite im mittleren Bereich glatt eben
und gegenüber dem mit 32 bezeichneten, nach unten vorspringenden Randbereich etwas zurückgesetzt. Dadurch wird erreicht,
daß der wenigstens auf zwei gegenüberliegenden Seiten, vorzugsweise aber rings um den Sockel 3o vorgesehene Randbereich
32 in einstückiger Ausbildung mit der Sockellinse 3o einen
Spann- bzw. Glättrahmen bildet, der am Rand der Lupe gegen den
Planfilm drückt und diesen im Sichtfeld flach hält.

Im Bereich des Fensters 16 ist eine Opalglasscheibe 34 fest
mit dem Gehäuseunterteil verbunden, z.B. verklebt. Das Opalglas sorgt in der für diese Anwendung üblichen Weise für eine
gleichmäßige Durchleuchtung des Filmmaterials im betrachteten
Bereich ohne störende Lichteffekte. Die Oberfläche der Opalglasscheibe 34 befindet sich etwa in der Mittelebene bzw. Teilfuge zwischen den beiden Gehäusehälften 12 und 14, zwischen
denen ein Querspalt 36 besteht, welcher etwa so lang ist wie
das Fenster 16 und quer durch das Gehäuse führt, so daß ein in
Fig. 2 mit 38 bezeichneter Planfilm hindurchgeführt werden
kann.

Der Glättrahmen 32 der Sockellinse 3o kann mit sehr genau eingestelltem Zwischenabstand zur Opalglasscheibe 34 parallel zu
dieser geführt werden, so daß gerade ein Planfilm zwischen diese
beiden Teile 32 und 34 passt. Da jedoch die Planfilme unterschiedliche Stärke haben können und wegen der gewünschten
gleichbleibenden Sehschärfe der Planfilm möglichst spielfrei
zwischen der Sockellinse 3o und der Opalglasscheibe 34 geführt und gehalten werden soll, ist es vorzuziehen, die Sockellinse mittels geeigneter Federglieder 36 nachgiebig gegen die
Opalglasscheibe 34 anzudrücken. Die Federglieder 36 können sich je nach Konstruktion des Schlittens 22 an diesem oder am Gehäuseoberteil 12 abstützen, wie dies in Fig. 4 gezeigt ist. Dadurch ergibt sich auch eine wünschenswerte Bremsung der Lupe 24 am Gehäuse 1o, so daß sie nicht unabsichtlich aus einer eingestellten Lage verrutscht.

Im Hinblick auf den leichten Andruck des Glättrahmens 32 an der Sockellinse 3o gegen den Planfilm ist es vorteilhaft, wenn der Glättrahmen 32 in der gezeigten Weise abgerundet oder abgeschrägt ist, um zu vermeiden, daß beim Verschieben der Lupe längs des Fensters 16 oder beim Hindurchführen des Planfilms 38 durch den Schlitz 36 der Film verkratzt wird.

Zu beiden Seiten des Fensters 16 ist jeweils ein Paar Transportwalzen 4o, 42 im Gehäuse drehbar gelagert. Im Beispielsfall werden die beiden oberen Walzen 4o durch ein am rechten Ende des Gehäuses angebrachtes Handrad 44 synchron und gleichsinnig angetrieben. Der Antrieb erfolgt über ein mit dem Handrad 44 verbundenes Zahnrad 46, welches gemäß Fig. 6 mit drehfest an den rechten Enden der Transportwalzen 4o angebrachten Zahnrädern 48 und 5o in Eingriff steht. Die mit den oberen Transportwalzen 4o jeweils zusammenwirkenden unteren Walzen 42 brauchen nur frei drehbar gelagerte Andruckwalzen zu sein, die zur Verbesserung der Reibung auch mit einem Gummiüberzug oder mit mehreren Gummiringen versehen sein können. Vorzugsweise werden die Walzen 4o, 42 jedes Walzenpaars federnd gegeneinandergedrückt, um den zwischen ihnen hindurchgeführten Planfilm zuverlässig zu erfassen und zu transportieren. Eine entsprechende  Lagerung der Walzen ist in Fig. 7 gezeigt. Danach sitzen die Lagerzapfen 52, 54 an den Enden der Walzen 4o, 42 in passenden Nuten der Gehäuseteile 12 bzw. 14, derart, daß die Walzen außer in der ihre beiden Mittellängsachsen einschließenden Ebene möglichst spielfrei gehalten sind. In die Nuten für die Lagerzapfen 52 der oberen Transportwalzen 4o sind gemäß Fig. 7 Federn 56 und Kugeln 58 eingesetzt, welche gegen die Achszapfen 52 und damit die Walzen 4o gegen die Walzen 42 drücken.

Anstelle eines am rechten Ende stirnseitig vom Gehäuse 1o abstehenden Handrads 44 kann auch gemäß Fig. 3 ein oben und/oder unten aus dem Gehäuse herausragendes Handrad 6o vorgesehen sein.

Wie Fig. 2 zeigt, erstreckt sich die Opalglasscheibe 34 nicht über die gesamte Länge des Fensters 16,so daß am rechten und linken Fensterende jeweils ein freier Durchbruch vorhanden ist. Die Länge dieser freien Durchbrüche ist so bemessen, daß jeweils dann, wenn die Lupe 24 ganz an das linke oder rechte Ende des Fensters 16 verschoben worden ist, etwa die eine Hälfte der Sockellinse 3o seitlich über die Opalglasscheibe 34 vorsteht und gesäubert werden kann. Dabei behält jedoch die andere Hälfte der Sockellinse 3o ihre federnde elastische Anlage an der Opalglasscheibe 34.

Zur Orientierung können, wie ebenfalls in Fig. 2 gezeigt, längs des Fensters 16 auf dem Gehäuse Kennungen z.B. Buchstaben zur Bezeichnung der verschiedenen Spalten der Abbildungen des Planfilms angebracht sein. Die verschiedenen Reihen der Abbildungen des Planfilms können auf diesem selbst mit anderen Kennungen, z.B. Ziffern, kenntlich gemacht sein. Die Anordnung der Transportwalzen 4o, 42 auf beiden Seiten des Fensters 16 bewirkt eine sehr geradlinige Führung des Planfilms beim Verschieben mittels des Handrads 44 bzw. 6o. Außerdem hat diese Konstruktion den Vorteil, daß der Planfilm auch noch dann sicher gehalten und geführt wird, wenn die Abbildungen an den Rändern des Planfilms mit der Lupe betrachtet werden.

A n s p r ü c h e
==================

1. Handlesegerät mit Lupe für Planfilme, z.B. Mikrofich
   stehend aus einem Gehäuse mit einer am Planfilm angreifenden
   Transporteinrichtung zu dessen geradliniger Bewegung relativ zur Lupe, d a d u r c h  g e k e n n z e i c h n e t,
   daß das Gehäuse (1o) ein längliches Fenster (16) bildet,
   längs dessen die Lupe (24) verschieblich geführt ist und
   quer zu dem der Planfilm (38) durch beiderseits des Fensters
   angeordnete Förderorgane (4o, 42) transportierbar ist.

2. Handlesegerät nach Anspruch 1, d a d u r c h  g e k e n n -
   z e i c h n e t, daß die Förderorgane (4o, 42) sich längs
   der Seitenkanten des Fensters (16) erstreckende Walzen sind,
   die synchron antreibbar sind.

3. Handlesegerät nach Anspruch 1 oder 2, d a d u r c h  g e -
   k e n n z e i c h n e t, daß die Lupe (24) für unterschiedliche Vergrößerungen auswechselbar gehaltert ist.

4. Handlesegerät nach einem der Ansprüche 1 bis 3, d a -
   d u r c h  g e k e n n z e i c h n e t, daß ein mit der Lupe
   (24) verbundener Glättrahmen (32) federnd gegen den an einer
   im Fenster (16) angeordneten, lichtdurchlässigen Scheibe
   (34) anliegenden Planfilm (38) andrückbar ist.

5. Handlesegerät nach einem der vorhergehenden Ansprüche, d a -
   d u r c h  g e k e n n z e i c h n e t, daß die Lupe (24)
   aus mehreren Linsen (28, 3o) besteht, von denen die dem Planfilm (38) nächste in einem Stück mit einem sie umgebenden
   Glättrahmen (32) ausgebildet ist, zwischen dem und einer im
   Fenster (16) angeordneten lichtdurchlässigen Scheibe (34)
   der Planfilm (38) geführt ist.

6. Handlesegerät nach Anspruch 5, d a d u r c h   g e -
k e n n z e i c h n e t ,   daß die den Glättrahmen (32)
bildende Linse (30) gleichzeitig auch Teil eines längs
des Fensters verschieblichen Schlittens (22) ist, auf
welchem die zusammengefaßten übrigen Linsen (28) der
Lupe (24) befestigbar sind.

7. Handlesegerät nach einem der vorhergehenden Ansprüche,
d a d u r c h   g e k e n n z e i c h n e t ,   daß eine
im Fenster (16) angeordnete lichtdurchlässige Scheibe (34)
um so viel kürzer ist als die Länge des Fensters (16),
daß in beiden Endstellungen der Lupe (24) die äußere
Oberfläche der dem Planfilm (38) nächsten Linse (30)
neben der Scheibe (34) wenigstens etwa zur Hälfte zum
Reinigen zugänglich ist.

8. Handlesegerät nach einem der vorhergehenden Ansprüche,
d a d u r c h   g e k e n n z e i c h n e t ,   daß das
Gehäuse (10) an einem Ende des länglichen Fensters (16)
mit einem Handgriff (18) und am anderen Ende mit einem
Handdrehknopf (44, 60) zum Antrieb der Förderorgane (40,
42) ausgebildet ist.

9. Handlesegerät nach einem der vorhergehenden Ansprüche,
d a d u r c h   g e k e n n z e i c h n e t ,   daß die
Transportorgane Walzenpaare (40, 42) sind, deren Walzen
federnd gegeneinander andrückbar sind.

10. Handlesegerät nach Anspruch 9, d a d u r c h   g e -
k e n n z e i c h n e t ,   daß wenigstens eine der
Walzen jedes Walzenpaars (40, 42) mit einer Gummiauflage oder Gummiringen belegt ist.

FIG.1

FIG.2

FIG.3

FIG.4

FIG.5

FIG.6

FIG.7